# EUROPÄISCHE PATENTSCHRIFT

(11) **EP 0 675 266 B1**
(45) Veröffentlichungstag und Bekanntmachung des Hinweises auf die Patenterteilung: **07.01.1999**
(21) Anmeldenummer: 95810183.4
(22) Anmeldetag: 17.03.1995
(51) Int. Cl.: F01M 1/10, F02B 39/14, B01D 35/12

(54) **Verfahren und Vorrichtung zum Schmieren der Lager eines Turboladers**
Method and device for lubricating the bearings of a turbocharger
Procédé et dispositif de lubrification des paliers d'un turbo-compresseur

(30) Priorität: 02.04.1994 DE 4411617
(43) Veröffentlichungstag der Anmeldung: 04.10.1995
(73) Patentinhaber: ASEA BROWN BOVERI AG, 5400 Baden (CH)
(72) Erfinder: Widenhorn, Markus, CH-8955 Oetwil a.d.L. (CH)

(56) Entgegenhaltungen:
- DE-B- 1 097 752
- FR-A- 1 435 241
- FR-A- 2 036 584
- GB-A- 2 066 688
- US-A- 3 157 131
- PATENT ABSTRACTS OF JAPAN vol. 011 no. 168 (M-594) ,29.Mai 1987 & JP-A-62 003115 (HINO MOTORS LTD;OTHERS: 01) 9.Januar 1987,
- PATENT ABSTRACTS OF JAPAN vol. 011 no. 278 (M-623) ,9.September 1987 & JP-A-62 078420 (MAZDA MOTOR CORP) 10.April 1987,

## Beschreibung

### Technisches Gebiet

Die Erfindung betrifft ein Verfahren und eine Vorrichtung zum Schmieren der Lager eines Turboladers mit einem Teil des Schmieröls einer am Turbolader angeschlossenen Brennkraftmaschine.

### Stand der Technik

Es ist bekannt, den Schmierölkreislauf eines Turboladers mit dem Schmieröl einer Brennkraftmaschine zu versorgen. Der relativ grosse Schmierölstrom einer Brennkraftmaschine wird nur grob, etwa mit einer Maschenweite von 50 *µ*m gefiltert. Das ist zwar für die meisten Schmierstellen ausreichend, jedoch nicht für die Lagerung eines Turboladers mit hohem Wirkungsgrad. Dieser benötigt aufgrund der relativ hohen Drehzahlen und den engen Schmierspalten Schmieröl feinerer Konsistenz, welches durch die bisher bekannten Schmierölsysteme von Brennkraftmaschinen nicht zur Verfügung gestellt werden kann.

Wollte man das gesamte Schmieröl auf die vom Turbolader benötigte Grössenordnung von etwa 5 bis 10 *µ*m filtern, müssten mehrere Feinfilter installiert werden. Aufgrund des dann extrem gesteigerten Reinigungsvolumens würden sich die Filterpatronen sehr schnell zusetzen, so dass ohne deren aufwendigen Austausch die Schmierung des Turboladers gefährdet wäre.

Bereits mit der DE-B 1 097 752 wird versucht, das Problem des Zusetzens und damit des aufwendigen Austauschs des Feinfilters für das Schmieröl eines Turboladers zu lösen. Dazu wird eine Ventilschaltung vorgeschlagen, mit deren Hilfe die zuvor mit feingefiltertem Öl versorgten Stellen bei verstopftem Feinfilter nur noch grob gefiltertes Öl erhalten. Damit wird jedoch nicht das Verstopfen des Feinfilters, sondern nur dessen nachteilige Wirkung für den Turbolader beseitigt.

Obgleich sowohl aus der US-A-3 157 131 als auch aus der FR-A-2 036 584 Filterrückspülsysteme bekannt sind, mit denen eine Lösung des Problems möglich gewesen wäre, wurden diese bis heute nicht für die Rückspülung der Feinfilter von Turboladern eingesetzt. Dagegen wurden mit der JP-A-62003115 und der JP-A-62 078420 andere Lösungen zur Vermeidung des aufwendigen Austauschs der Feinfilter gesucht und gefunden, welche jedoch letztlich deren Zusetzen und damit den erforderlichen Austausch nur zeitlich hinausschieben.

### Darstellung der Erfindung

Die Erfindung versucht, all diese Nachteile zu vermeiden. Ihr liegt die Aufgabe zugrunde, ein Verfahren und eine Vorrichtung zum Schmieren der Lager eines Turboladers mit einem Teil des Schmieröls einer am Turbolader angeschlossenen Brennkraftmaschine zu schaffen, durch die mit relativ geringem Aufwand an Arbeitszeit und -mitteln alle Schmierstellen mit Schmieröl geeigneter Konsistenz versorgt werden.

Erfindungsgemäss wird dies dadurch erreicht, dass bei einem Verfahren gemäss Oberbegriff des Anspruchs 1, der grob gereinigte Ölstrom für den Turbolader zunächst durch einen von zumindest zwei wechselweise zugeschalteten Feinfiltern geführt und dabei auf die vom Turbolader benötigte Konsistenz gefiltert wird. Ein Teil des fein gefilterten Ölstroms wird als Schmieröl in die Lager des Turboladers und der andere Teil als Spülöl in Gegenstromrichtung durch das zweite Feinfilter geleitet. Anschliessend wird sowohl das Schmieröl als auch das Spülöl in die ölwanne abgeleitet.
Bei verschmutztem ersten Feinfilter wird das zuvor mittels des fein gefilterten Ölstroms gespülte zweite Feinfilter in die Ölleitung des Turboladers geschaltet und übernimmt damit die Reinigungsfunktion des ersten Feinfilters. Das zugesetzte erste Feinfilter wird dann mit dem Spülöl gereinigt.

Dazu ist in der zum Turbolader führenden Ölleitung ein Schaltventil angeordnet, an welches ein erstes Feinfilter anschliesst. Hinter diesem ersten Feinfilter ist eine Verzweigung der Ölleitung zum Turbolader bzw. zur Reinseite eines zweiten Feinfilters gleicher Maschenweite ausgebildet. Die Schmutzseite des zweiten Feinfilters ist über das Schaltventil mit einer weiteren Rückführleitung zur Ölwanne verbunden.

Es ist besonders zweckmässig, wenn die Durchlässigkeit des ersten Feinfilters ständig überwacht wird. Das zweite Feinfilter wird durch Betätigung des Schaltventils in die Ölleitung des Turboladers geschaltet. Diese Umschaltung erfolgt beim Erreichen eines Grenzwertes, der von der erforderlichen Durchlässigkeit des ersten Feinfilters bestimmt wird. Damit übernimmt jedes der beiden Feinfilter abwechselnd und in Abhängigkeit von der Durchlässigkeit des jeweils ersten Feinfilters die Funktion des anderen.

Ferner ist es vorteilhaft, wenn die Überwachung der Durchlässigkeit mittels ständiger Öldruckmessung und die Betätigung des Schaltventils bei einer bestimmten, dem Grenzwert entsprechenden Druckdifferenz zwischen der ersten und der letzten Öldruckmessung erfolgt. Dazu ist in der zum Turbolader führenden Ölleitung, zwischen den Feinfiltern und dem Turbolader, ein Druckmesser angeordnet, der über eine Auswerte- und Stelleinheit mit dem Schaltventil verbunden ist.

Die Vorteile der Erfindung bestehen unter anderem darin, dass nur ein Bruchteil des gesamten Schmieröls, nämlich der Ölstrom des Turboladers fein gefiltert wird und deshalb der zum Filtern erforderliche Aufwand relativ gering ist.

Aufgrund der erfindungsgemässen Anordnung von zwei abwechselnd zugeschalteten Feinfiltern und deren per Schaltventil erfolgende automatische Umschaltung entsprechend dem Verschmutzungsgrad des jeweils ersten Feinfilters, ist ein wartungsfreier Betrieb der Anlage gewährleistet.

### Kurze Beschreibung der Zeichnung

In der Zeichnung ist ein Ausführungsbeispiel der Erfindung anhand des Schmierölkreislaufes einer mit einem Turbolader verbundenen Brennkraftmaschine dargestellt.

Es zeigen:
- Fig. 1: eine schematische Darstellung des Schmierölkreislaufes;
- Fig. 2: eine Darstellung entsprechend Fig. 1, jedoch nach Betätigung des Schaltventils.

Es sind nur die für das Verständnis der Erfindung wesentlichen Elemente gezeigt. Nicht dargestellt ist von der Anlage beispielsweise die Brennkraftmaschine selbst. Die Strömungsrichtung der Arbeitsmittel ist mit Pfeilen bezeichnet.

### Weg zur Ausführung der Erfindung

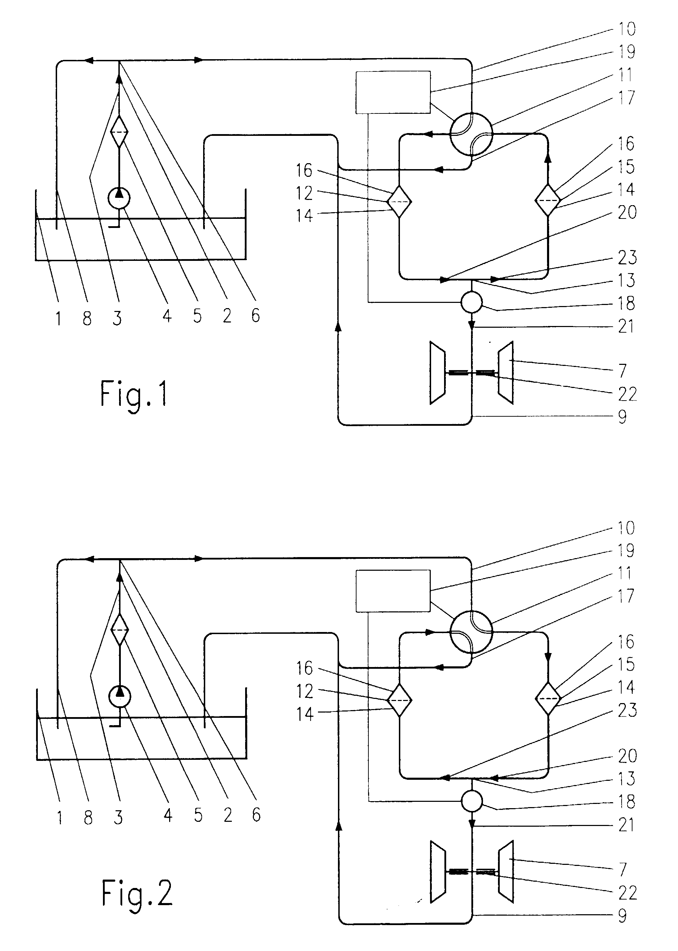

Der Schmierölkreislauf besteht aus einer Ölwanne 1, einer den Ölstrom 2 aus der Ölwanne 1 in die Ölleitung 3 liefernden Ölpumpe 4, einem Grobfilter 5, einer Verzweigung 6 der Ölleitung 3 zur nicht dargestellten Brennkraftmaschine bzw. zum Turbolader 7 und aus jeweils einer Rückführleitung 8,9 zur Ölwanne 1. In der zum Turbolader 7 führenden Ölleitung 10 ist ein Schaltventil 11 angeordnet und als Vierwegeventil ausgebildet. Daran schliesst sich ein erstes Feinfilter 12 mit einer Maschenweite von kleiner/gleich 10 *µ*m an. Hinter dem ersten Feinfilter 12 ist eine Verzweigung 13 der Ölleitung 10 zum Turbolader 7 bzw. zur Reinseite 14 eines zweiten Feinfilters 15 gleicher Maschenweite ausgebildet. Die Schmutzseite 16 des zweiten Feinfilters 15 ist über das Vierwegeventil 11 mit einer weiteren Rückführleitung 17 zur Ölwanne 1 verbunden (Fig. 1).
Zwischen dem Turbolader 7 und den Feinfiltern 12,15 ist in der zum Turbolader 7 führenden Ölleitung 10 ein Druckmesser 18 angeordnet und über eine Auswerte- und Stelleinheit 19 mit dem Vierwegeventil 11 verbunden.

Beim Betrieb der Brennkraftmaschine wird der grob gereinigte Ölstrom 2 für den Turbolader 7 zunächst durch das erste Feinfilter 12 geführt und dabei auf kleiner/gleich 10 *µ*m gefiltert. Eine Teil (z.B. die Hälfte) des dann fein gefilterten Ölstroms 20 wird als Schmieröl 21 in die Lager 22 des Turboladers 7, die andere Hälfte als Spülöl 23 in das zweite Feinfilter 15 eingeleitet. Sowohl das Schmieröl 21 als auch das Spülöl 23 werden anschliessend zur Ölwanne 1 abgeleitet.

Mittels ständiger Öldruckmessung wird die Durchlässigkeit des ersten Feinfilters 12 überwacht. Ist dieses verschmutzt, wird das zuvor gespülte zweite Feinfilter 15 durch Umschaltung des Vierwegeventils 11 in die Ölleitung 10 des Turboladers 7 geschaltet und das erste Feinfilter 12 mit dem Spülöl 23 gereinigt (Fig. 2). Die automatische Umschaltung erfolgt bei Erreichen eines Grenzwertes, der von der erforderlichen Durchlässigkeit des ersten Feinfilters 12 bestimmt und durch die Druckdifferenz zwischen der ersten und der letzten Öldruckmessung ermittelt wird.

### Bezugszeichenliste

- 1: Ölwanne
- 2: Ölstrom
- 3: Ölleitung
- 4: Ölpumpe
- 5: Grobfilter
- 6: Verzweigung
- 7: Turbolader
- 8: Rückführleitung
- 9: Rückführleitung
- 10: Ölleitung
- 11: Schaltventil, Vierwegeventil
- 12: Feinfilter
- 13: Verzweigung
- 14: Reinseite
- 15: Feinfilter
- 16: Schmutzseite
- 17: Rückführleitung
- 18: Druckmesser
- 19: Auswerte- und Stelleinheit
- 20: Ölstrom
- 21: Schmieröl
- 22: Lager
- 23: Spülöl

## Patentansprüche

1. Verfahren zum Schmieren der Lager eines Turboladers mit einem Teil des Ölstroms einer am Turbolader angeschlossenen Brennkraftmaschine, bei dem der in einem Grobfilter gereinigte Ölstrom in die Lager der Brennkraftmaschine bzw. des Turboladers gepumpt und nach dem Schmiervorgang über jeweils eine Rückführleitung zur Ölwanne abgeleitet wird, dadurch gekennzeichnet, dass
a) der grob gereinigte Ölstrom (2) für den Turbolader (7) zunächst durch eines von zumindest zwei wechselweise zugeschalteten Feinfiltern (12,15) geführt und dabei auf die vom Turbolader (7) benötigte Konsistenz gefiltert wird,
b) ein Teil des fein gefilterten Ölstroms (20) als Schmieröl (21) in die Lager (22) des Turboladers (7), der andere Teil als Spülöl (23) in die Reinseite (14) des zweiten Feinfilters (15) eingeleitet und sowohl Schmieröl (21) als auch Spülöl (23) anschliessend zur Ölwanne (1) abgeleitet werden,
c) bei zugesetztem ersten Feinfilter (12) das zuvor gespülte zweite Feinfilter (15) in die Ölleitung (10) des Turboladers (7) geschaltet und das erste Feinfilter (12) mit dem Spülöl (23) gereinigt wird.

2. Verfahren nach Anspruch 1, dadurch gekennzeichnet, dass die Durchlässigkeit des ersten Feinfilters (12) ständig überwacht und das zweite Feinfilter (15) durch Betätigung eines Schaltventils (11) in die Ölleitung (10) des Turboladers (7) geschaltet wird, wobei die Umschaltung bei Erreichen eines Grenzwertes erfolgt, der von der erforderlichen Durchlässigkeit des ersten Feinfilters (12) bestimmt wird.

3. Verfahren nach Anspruch 2, dadurch gekennzeichnet, dass die Überwachung der Durchlässigkeit mittels ständiger Öldruckmessung und die Betätigung des Schaltventils (11) beim Erreichen einer bestimmten, dem Grenzwert entsprechenden Druckdifferenz zwischen der ersten und der letzten Öldruckmessung erfolgt.

4. Vorrichtung zum Schmieren der Lager eines Turboladers mit einem Teil des Ölstroms einer am Turbolader angeschlossenen Brennkraftmaschine, bestehend aus einer Ölwanne, einer den Ölstrom aus der Ölwanne in die Ölleitung liefernden Ölpumpe, einem Grobfilter, einer Verzweigung der Ölleitung zur Brennkraftmaschine bzw. zum Turbolader und aus jeweils einer Rückführleitung zur Ölwanne, dadurch gekennzeichnet, dass
a) in der zum Turbolader (7) führenden Ölleitung (10) ein Schaltventil (11) angeordnet ist, an welches sich ein erstes Feinfilter (12) anschliesst,
b) nach dem ersten Feinfilter (12) eine Verzweigung (13) der Ölleitung (10) zum Turbolader (7) bzw. zur Reinseite (14) eines zweiten Feinfilters (15) gleicher Maschenweite ausgebildet und
c) die Schmutzseite (16) des zweiten Feinfilters (15) über das Schaltventil (11) mit einer weiteren Rückführleitung (17) zur Ölwanne (1) verbunden ist.

5. Vorrichtung nach Anspruch 4, dadurch gekennzeichnet, dass in der zum Turbolader (7) führenden Ölleitung (10), zwischen den Feinfiltern (12,15) und dem Turbolader (7), ein Druckmesser (18) angeordnet und dieser über eine Auswerte- und Stelleinheit (19) mit dem Schaltventil (11) verbunden ist.

6. Vorrichtung nach Anspruch 4 und 5 , dadurch gekennzeichnet, dass Schaltventil (11) als Vierwegeventil ausgebildet ist.

## Claims

1. Method for lubricating the bearings of a turbocharger with a portion of the oil flow of an internal combustion engine attached to the turbocharger, in which the oil flow filtered in a coarse filter is pumped into the bearings of the internal combustion engine and the turbocharger respectively, and after the lubricating operation is drained off to the oil sump in each case via a return line, characterized in that
a) the coarsely filtered oil flow (2) for the turbocharger (7) is first of all passed through one of at least two fine filters (12, 15) connected alternately and in the process is filtered to the consistency required by the turbocharger (7),
b) a portion of the finely filtered oil flow (20) is fed as lubricating oil (21) into the bearings (22) of the turbocharger (7), the other portion is fed as flushing oil (23) into the clean side (14) of the second fine filter (15), and both the lubricating oil (21) and the flushing oil (23) are then drained off into the oil sump (1),
c) if the first fine filter (12) is clogged, the second fine filter (15) flushed beforehand is switched to the oil line (10) of the turbocharger (7) and the first fine filter (12) is cleaned with the flushing oil (23).

2. Method according to Claim 1, characterized in that the permeability of the first fine filter (12) is constantly monitored, and the second fine filter (15) is switched to the oil line (10) of the turbocharger (7) by actuating a control valve (11), the change-over being effected upon reaching a limit value which is governed by the requisite permeability of the first fine filter (12).

3. Method according to Claim 2, characterized in that the monitoring of the permeability is effected by means of constant measurement of the oil pressure and the actuation of the control valve (11) is effected upon reaching a certain pressure difference, corresponding to the limit value, between the first and the last measurement of the oil pressure.

4. Apparatus for lubricating the bearings of a turbocharger with a portion of the oil flow of an internal combustion engine attached to the turbocharger, consisting of an oil sump, an oil pump delivering the oil flow from the oil sump into the oil line, a coarse filter, a branch of the oil line to the internal combustion engine and the turbocharger respectively, and in each case a return line to the oil sump, characterized in that
a) a control valve (11) is arranged in the oil line (10) leading to the turbocharger (7), following which control valve (11) is a first fine filter (12),
b) a branch (13) of the oil line (10) to the turbocharger (7) and respectively the clean side (14) of a second fine filter (15) of the same mesh width is formed downstream of the first fine filter (12), and
c) the dirty side (16) of the second fine filter (15) is connected via the control valve (11) to a further return line (17) leading to the oil sump (1).

5. Apparatus according to Claim 4, characterized in that a pressure gauge (18) is arranged in the oil line (10) leading to the turbocharger (7), between the fine filters (12, 15) and the turbocharger (7), and this pressure gauge (18) is connected to the control valve (11) via an analysing and regulating unit (19).

6. Apparatus according to Claims 4 and 5, characterized in that the control valve (11) is designed as a four-way valve.

## Revendications

1. Procédé de lubrification des paliers d'un turbo-compresseur avec une partie du flux d'huile d'un moteur à combustion interne relié au turbo-compresseur, dans lequel le flux d'huile épuré dans un filtre grossier est refoulé dans les paliers du moteur à combustion interne, respectivement du turbo-compresseur, et est renvoyé dans le carter à huile par une conduite de retour respective après l'opération de lubrification, caractérisé en ce que
a) le flux d'huile grossièrement épuré (2) pour le turbo-compresseur (7) est d'abord conduit à travers un d'au moins deux filtres fins (12, 15) raccordés en alternance et est ainsi filtré à la consistance requise par le turbo-compresseur (7),
b) une partie du flux d'huile finement filtré (20) est conduite en qualité d'huile de lubrification (21) dans les paliers (22) du turbo-compresseur (7), l'autre partie est introduite en qualité d'huile de lavage (23) dans le côté propre (14) du second filtre fin (15), et ensuite, aussi bien l'huile de lubrification (21) que l'huile de lavage (23) sont renvoyées dans le carter à huile (1),
c) lorsque le premier filtre fin (12) est encrassé, le second filtre fin (15), préalablement lavé, est raccordé dans la conduite d'huile (10) du turbo-compresseur (7) et le premier filtre fin (12) est nettoyé avec l'huile de lavage (23).

2. Procédé suivant la revendication 1, caractérisé en ce que la perméabilité du premier filtre fin (12) est surveillée en permanence et le second filtre fin (15) est raccordé dans la conduite d'huile (10) du turbo-compresseur (7) en actionnant une vanne d'inversion (11), cette inversion se produisant lorsque l'on atteint une valeur limite, qui est déterminée par la perméabilité nécessaire du premier filtre fin (12).

3. Procédé suivant la revendication 2, caractérisé en ce que la surveillance de la perméabilité est effectuée au moyen d'une mesure permanente de la pression de l'huile et la vanne d'inversion (11) est actionnée lorsque l'on atteint une différence de pression déterminée, correspondant à la valeur limite, entre la première et la dernière mesure de la pression de l'huile.

4. Dispositif de lubrification des paliers d'un turbo-compresseur avec une partie du flux d'huile d'un moteur à combustion interne relié au turbo-compresseur, se composant d'un carter à huile, d'une pompe à huile débitant le flux d'huile du carter à huile dans la conduite d'huile, d'un filtre grossier, d'un branchement de la conduite d'huile vers le moteur à combustion interne, respectivement vers le turbo-compresseur, et d'une conduite de retour respective vers le carter à huile, caractérisé en ce que
a) dans la conduite d'huile (10) menant au turbo-compresseur (7) est disposée une vanne d'inversion (11), à laquelle se raccorde un premier filtre fin (12),
b) après le premier filtre fin (12) est formée un branchement (13) de la conduite d'huile (10) vers le turbo-compresseur (7), respectivement vers le côté propre (14) d'un second filtre fin (15) de même taille de maille, et
c) le côté encrassé (16) du second filtre fin (15) est raccordé à une autre conduite de retour (17) vers le carter à huile (1) via la vanne d'inversion (11).

5. Dispositif suivant la revendication 4, caractérisé en ce qu'un manomètre (18) est disposé dans la conduite d'huile (10) menant au turbo-compresseur (7), entre les filtres fins (12, 15) et le turbo-compresseur (7), et est raccordé à la vanne d'inversion (11) par une unité d'évaluation et de réglage (19).

6. Dispositif suivant la revendication 4 et 5, caractérisé en ce que la vanne d'inversion (11) est constituée par une vanne à quatre voies.
